# EUROPÄISCHE PATENTANMELDUNG

(11) **EP 4 538 054 A1**
(43) Veröffentlichungstag der Anmeldung: **16.04.2025**
(21) Anmeldenummer: 24203268.8
(22) Anmeldetag: 27.09.2024
(51) Int. Cl.: B60C 1/00, C08L 17/00, C08L 93/00, C08J 11/28

(54) **KAUTSCHUKMISCHUNG UND REIFEN**

(30) Priorität: 09.10.2023 DE 102023209802
(71) Anmelder: Continental Reifen Deutschland GmbH, 30175 Hannover (DE)
(72) Erfinder: Schax, Fabian, 30175 Hannover (DE); Lhuillier, Nadia, 30175 Hannover (DE)
(74) Vertreter: Continental Corporation

(57) **Zusammenfassung**

Die Erfindung betrifft eine schwefelvernetzbare Kautschukmischung, insbesondere für den Laufstreifen von Fahrzeugreifen, enthaltend wenigstens folgende Bestandteile:
- zumindest einen Dienkautschuk,
- 5 bis 70 phr (Gewichtsteile, bezogen auf 100 Gewichtsteile der gesamten Kautschuke in der Mischung) zumindest eines Terpenharzes,
- 5 bis 80 phr zumindest eines Kautschukregenerates, und
- 40 - 350 phr zumindest eines Füllstoffes.

## Beschreibung

Die Erfindung betrifft eine schwefelvernetzbare Kautschukmischung, insbesondere für den Laufstreifen von Fahrzeugreifen.

Die Erfindung betrifft ferner einen Fahrzeugluftreifen mit zumindest einem Bauteil, das aus einer solchen mit Schwefel vulkanisierten Kautschukmischung besteht.

Da die Fahreigenschaften eines Reifens, insbesondere Fahrzeugluftreifens, in einem großen Umfang von der Kautschukzusammensetzung des Laufstreifens abhängig sind, werden besonders hohe Anforderungen an die Zusammensetzung der Laufstreifenmischung gestellt. Dabei bestehen Zielkonflikte zwischen den meisten der bekannten Reifeneigenschaften wie Nassgriffverhalten, Bremsverhalten, Handling-Verhalten, Rollwiderstand, Wintereigenschaften, Abriebverhalten und Reißeigenschaften. Es wurden bereits vielfältige Versuche unternommen, die Eigenschaften des Reifens durch die Variation der Polymerkomponenten, der Füllstoffe und der sonstigen Zuschlagstoffe in der Laufstreifenmischung positiv zu beeinflussen.

Zusätzlich zu den vorgenannten Zielsetzungen im Hinblick auf die Mischungs- und Vulkanisateigenschaften ist man heutzutage bestrebt, in Kautschukmischungen für Fahrzeugreifen möglichst nachhaltige und umweltfreundliche Materialien einzusetzen, die Abhängigkeit von fossilen Rohstoffen zu reduzieren und den Ausstoß an Treibhausgasen zu minimieren.

Ein Weg zu nachhaltigen Produkten führt über das Recycling von alten, nicht mehr benötigten Produkten, wie z. B. dem Recycling von alten Reifen, wobei das recycelte Material in die Herstellung neuer Reifen zurückgeführt wird. Aus dem Stand der Technik ist beispielsweise bekannt, dass Gummiwerkstoffe aus alten Förderbändern oder Altreifen aufbereitet werden können, um als Zusatzstoff in vulkanisierbaren Kautschukmischungen eingesetzt zu werden, welche anschließend im Zuge der Fertigung von Reifen oder anderen Kautschukprodukten ausgeformt und zu den gewünschten Kautschukprodukten vulkanisiert werden können. Diese sogenannten Kautschukregenerate können dabei prinzipiell auf verschiedene Arten hergestellt werden. Insbesondere sind aus dem Stand der Technik aufbereitete Materialien bekannt, bei denen es sich im engeren Sinne noch um einen Gummiwerkstoff, d. h. um vernetzten Kautschuk handelt, dessen Plastizität jedoch mittels geeigneter Behandlungsverfahren, insbesondere unter Einsatz von thermisch-chemischer Belastung und Chemikalien, an die Plastizität von unvulkanisiertem Kautschuk angeglichen wird. Ein Verfahren zur Herstellung von Kautschukregenerat mit speziellen Regenerierungsmitteln beschreibt beispielsweise die DE 10 2012 108 096 A1. Darüber hinaus gibt es Kautschukregenerate, bei denen es zumindest teilweise zu einer Devulkanisation, d. h. dem Aufbrechen von chemischen Verknüpfungen im Gummiwerkstoff, kommt und bei denen entsprechend die Depolymerisation des zuvor vernetzten Gummiwerkstoffes zu einem Anstieg der Plastizität beiträgt.

Zur Herstellung von Kautschukregeneraten aus Gummiwerkstoffen werden verschiedene Technologien und Verfahren eingesetzt, beispielsweise die Dampfregeneration, die mechanische Regeneration, die thermische Regeneration, die schallwellenbasierte Regeneration, die strahlungsbasierte Regeneration, die chemische Regeneration und Kombinationen dieser Methoden.

Ein anderer Weg, die Nachhaltigkeit von Produkten zu verbessern, besteht in der Verwendung von Substanzen aus nachwachsenden Rohstoffen als Zuschlagstoffe für Kautschukmischungen. Derartige Zuschlagstoffe aus nachwachsenden Rohstoffen sind beispielsweise Pflanzenöle, Harze auf Basis nachwachsender Rohstoffe oder Reisschalen-Silika. Letzteres ist Silika, welches aus biobasiertem Natriumsilikat aus Reishülsenasche hergestellt wird.

Der Erfindung liegt die Aufgabe zugrunde, nachhaltige Kautschukmischungen für die Laufstreifen von Fahrzeugreifen bereitzustellen, die sich durch einen verbesserten Rollwiderstand sowie eine verbesserte mechanisch-strukturelle Haltbarkeit auszeichnen.

Gelöst wird diese Aufgabe erfindungsgemäß durch eine schwefelvernetzbare Kautschukmischung, insbesondere für den Laufstreifen von Fahrzeugreifen, die wenigstens folgende Bestandteile enthält:
- zumindest einen Dienkautschuk,
- 5 bis 70 phr (Gewichtsteile, bezogen auf 100 Gewichtsteile der gesamten Kautschuke in der Mischung) zumindest eines Terpenharzes,
- 5 bis 80 phr zumindest eines Kautschukregenerates, und
- 40 - 350 phr zumindest eines Füllstoffes.

Überraschenderweise hat sich herausgestellt, dass die spezielle Kombination von zumindest einem Terpenharz mit einem Kautschukregenerat in den angegebenen Mengen in einer füllstoffhaltigen Dienkautschukmischung zu einem verringerten Verlustfaktor tan δ (10 %) aus RPA-Messung (= *engl.* "**r**ubber **p**rocess **a**nalyzer") an der konditionierten Probe in Anlehnung an ASTM D6601 führt. Dieser verringerte Verlustfaktor tan δ (10 %) lässt sich bei der Anwendung der Mischung in Reifenlaufstreifen mit einem verringerten Rollwiderstand korrelieren. Gleichzeitig weisen die Mischungen nach der Vulkanisation eine höhere Hochgeschwindigkeitsreißenergie (HSTE gemäß ISO 8256) auf, was als Indikator für eine bessere strukturelle Haltbarkeit und bessere Widerstandsfähigkeit gegen Schnitte in und Ausbrüche aus dem Gummimaterial anzusehen ist.

Die erfindungsgemäße Kautschukmischung zeichnet sich durch die Verwendung von Kautschukregenerat auch durch eine verbesserte Nachhaltigkeit aus.

Die in dieser Schrift verwendete Angabe phr (parts per hundred parts of rubber by weight) ist die in der Kautschukindustrie übliche Mengenangabe für Mischungsrezepturen. Die Dosierung der Gewichtsteile der einzelnen Substanzen wird in dieser Schrift auf 100 Gewichtsteile der gesamten Masse aller in der Mischung vorhandenen (primären) Kautschuke bezogen mit einem Molekulargewicht M_{w} gemäß GPC von größer als 20000 g/mol. Die Kautschukregenerate werden dabei nicht mit in die Gesamtmasse der als Primärrohstoffe eingesetzten, hochmolekularen Kautschuke einbezogen. Entsprechend addiert sich im Rahmen der vorliegenden Erfindung der Masseanteil der als Primärrohstoff eingesetzten hochmolekularen Kautschuke in der Kautschukmischung, d.h. der Kautschuke, die nicht aus einem Kautschukregenerat stammen, zu 100 phr.

Erfindungsgemäß enthält die Kautschukmischung wenigstens einen Dienkautschuk. Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.

Der bzw. die Dienkautschuk(e) ist bzw. sind dabei bevorzugt ausgewählt aus der Gruppe bestehend aus natürlichem Polyisopren (NR), synthetischem Polyisopren (IR), epoxidiertem Polyisopren (ENR), Butadien-Kautschuk (BR), Butadien-Isopren-Kautschuk, Styrol-Butadien-Kautschuk (SBR), insbesondere lösungspolymerisiertem Styrol-Butadien-Kautschuk (SSBR) und emulsionspolymerisiertem Styrol-Butadien-Kautschuk (ESBR), Styrol-Isopren-Kautschuk, Flüssigkautschuken mit einem Molekulargewicht M_{w} von größer als 20000 g/mol, Halobutyl-Kautschuk, Polynorbornen, Isopren-Isobutylen-Copolymer, Ethylen-Propylen-Dien-Kautschuk, Nitril-Kautschuk, Chloropren-Kautschuk, Acrylat-Kautschuk, Fluor-Kautschuk, Silikon-Kautschuk, Polysulfid-Kautschuk, Epichlorhydrin-Kautschuk, Styrol-Isopren-Butadien-Terpolymer, hydriertem Acrylnitrilbutadien-Kautschuk und hydriertem Styrol-Butadien-Kautschuk.

Insbesondere Nitrilkautschuk, hydrierter Acrylnitrilbutadienkautschuk, Chloroprenkautschuk, Butylkautschuk, Halobutylkautschuk oder Ethylen-Propylen-Dien-Kautschuk kommen bei der Herstellung von technischen Gummiartikeln, wie Gurten, Riemen und Schläuchen, und/oder Schuhsohlen zum Einsatz. Dabei finden die dem Fachmann für diese Kautschuke bekannten - im Hinblick auf Füllstoffe, Weichmacher, Vulkanisationssysteme und Zuschlagstoffe besonderen - Mischungszusammensetzungen bevorzugte Anwendung.

Gemäß einer besonders bevorzugten Ausführungsform der Erfindung ist bzw. sind der bzw. die Dienkautschuk(e) ausgewählt aus der Gruppe bestehend aus natürlichem Polyisopren (NR), synthetischem Polyisopren (IR), Butadien-Kautschuk (BR), lösungspolymerisiertem Styrol-Butadien-Kautschuk (SSBR) und emulsionspolymerisiertem Styrol-Butadien-Kautschuk (ESBR). Eine derartige Kautschukmischung ist insbesondere für den Laufstreifen von Fahrzeugreifen geeignet. Natürliches Polyisopren wird verstanden als Kautschuk, der durch Ernte von Quellen wie Kautschukbäumen (Hevea brasiliensis) oder nicht-Kautschukbaumquellen (wie z. B. Guayule oder Löwenzahn (z. B. Taraxacum koksaghyz)) gewonnen werden kann. Unter natürlichem Polyisopren (NR) wird kein synthetisches Polyisopren verstanden.

Die Kautschukmischung enthält 5 bis 70 phr, bevorzugt 10 bis 60 phr, besonders bevorzugt 20 bis 50 phr zumindest eines Terpenharzes. Es können auch mehrere unterschiedliche Terpenharze eingesetzt werden. Terpenharze sind Kohlenwasserstoff-Harze, die durch Polymerisation von Terpenen gewonnen werden. Zu den Terpenharzen werden auch Copolymere aus Terpernen und anderen Monomeren, wie Styrol, und Isopren, gezählt.

Die verwendeten Terpenharze können unterschiedliche mittlere Molekulargewichte aufweisen. Vorzugsweise weist das zumindest eine Terpenharz ein mittleres Molekulargewicht M_{w} gemäß GPC von 800 bis 1500 g/mol auf. Derartige Terpenharze lassen sich gut verarbeiten und führen zu guten Reißeigenschaften.

Gemäß einer bevorzugten Weiterbildung der Erfindung weist das Terpenharz einen Erweichungspunkt von 100 bis 140 °C, vorzugsweise 110 bis 130 °C, auf.

Für ein gutes Bremsverhalten eines Reifens, dessen Laufstreifen aus der erfindungsgemäßen Kautschukmischung besteht, weist das Terpenharz eine Glasübergangstemperatur Tg gemäß DSC von der 50 bis 100 °C, vorzugsweise von 50 bis 80 °C, auf.

Gemäß einer bevorzugten Weiterbildung der Erfindung basiert das zumindest eine Terpenharz zu mehr als 95 % auf biologisch nachwachsenden Rohstoffen. Das trägt dazu bei, die Nachhaltigkeit der Kautschukmischung zu verbessern. Unter dem Begriff "eines zu mehr als 95 % auf biologisch nachwachsenden Rohstoffen basierenden Terpenharzes" ist im Rahmen der vorliegenden Erfindung ein Terpenharz zu verstehen, das stofflich aus nachwachsenden Rohstoffen als Quelle hergestellt ist, wobei insbesondere pflanzliche Quellen bevorzugt sind.

Vorzugsweise basiert das Terpenharz zu 100 % auf biologisch nachwachsenden Rohstoffen.

Terpenharze, die zu mehr als 95 % auf biologisch nachwachsenden Rohstoffen basieren, können z. B. aus Rohstoffen gewonnen werden, die bei der Herstellung von Duftstoffen aus Orangenschalen anfallen. Vorzugsweise basiert das Terpenharz jedoch auf Nebenprodukten, die bei Zellstoffherstellung von Nadelhölzern anfallen. Derartige Nebenprodukte sind in großen Mengen auf dem Markt verfügbar und lassen sich großtechnisch zu Terpenharzen veredeln.

Gemäß einer bevorzugten Weiterbildung der Erfindung basiert das zumindest eine Terpenharz nicht auf Limonen.

Vorzugsweise basiert das zumindest eine Terpenharz auf α- und β-Pinen.

Derartige Terpenharze lassen sich aus Nebenprodukten, die bei der Zellstoffherstellung aus Nadelhölzern anfallen, herstellen.

Es können im Rahmen der Erfindung auch verschiedene Terpenharze aus unterschiedlichen Quellen eingesetzt werden.

Als Terpenharze, die gemäß der Erfindung eingesetzt werden können, können beispielsweise solche des Typs Sylvatraxx^{®} 8115 und Sylvatraxx^{®} 8125 von der Firma Kraton Chemicals SAS zum Einsatz kommen. Diese basieren nicht auf Limonen. Sie basieren zu 100 % auf biologisch nachwachsenden Rohstoffen.

Die Kautschukmischung enthält 5 bis 80 phr, vorzugsweise 5 bis 40 phr, zumindest eines Kautschukregenerates. Die Kautschukregenerate können durch unterschiedliche Verfahren und/oder unterschiedliche Regenerierungsmittel hergestellt werden und es können unterschiedliche Ausgangsmaterialien für die Regenerierung verwendet werden.

Um die Reißfestigkeit der Vulkanisate zu verbessern hat es sich als vorteilhaft erwiesen, wenn das zumindest eine Kautschukregenerat mittels zumindest eines Regenerierungsmittels, ausgewählt aus der Gruppe bestehend aus Dithiophosphorylpolysulfiden und Silanen mit einer Polysulfangruppe, aus einer Gummiwerkstoffmischung in einem Innenmischer hergestellt wurde, wobei die Gummiwerkstoffmischung aus zumindest 50 Gew.-% aus zerkleinerten Laufstreifen von LKW-Radialreifen und/oder Bus-Radialreifen besteht.

Gemäß einer bevorzugten Ausführungsform der Erfindung weist das Dithiophosphorylpolysulfid die allgemeine Formel I 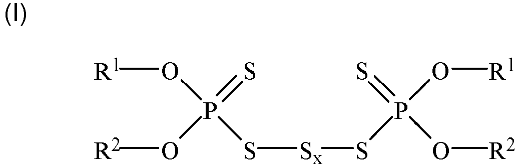 auf, wobei R¹ und R² gleich oder verschieden sind und ausgewählt sind aus linearen oder verzweigten C₃- bis C₂₀-Alkylresten und x = 1 bis 6 ist.

Besonders bevorzugt ist das Dithiophosphorylpolysulfid ein Bis-(O,O-2-Ethylhexyl-) Thiophosphorylpolysulfid.

Gemäß einer bevorzugten Ausführungsform der Erfindung verwendet man als Regenerierungsmittel wenigstens ein Silan mit einer Polysulfangruppe der allgemeinen Formel II oder ein Gemisch enthaltend wenigstens ein Silan mit einer Polysulfangruppe der allgemeinen Formel II

(II) (R²O)_{3-y}R³_{y}-Si-R¹-Sₓ-R¹-Si-(OR²)_{3-z}R³_{z}

wobei x = 1 bis 8 ist und wobei die R¹ in einem Molekül gleich oder verschieden sind und ausgewählt sind aus linearen oder verzweigten C₁- bis C₁₈-Alkylresten, wobei die R² und R³ in einem Molekül gleich oder verschieden sind und ausgewählt sind aus linearen oder verzweigten oder zyklischen gesättigten C₁-bis C₃₀-Alkylresten, und wobei y und z gleich oder verschieden und 0 bis 3 sind.

Die Zahl der Wasserstoffatome der Alkylreste ergibt sich aus der Zahl der Kohlenstoffatome.

Bevorzugt ist x = 1 bis 5, besonders bevorzugt ist x = 2 bis 4 und in einer ganz besonders bevorzugten Ausführungsform ist x = 4.

Gemäß einer besonders bevorzugten Weiterbildung ist das Silan mit einer Polysulfangruppe ein Bis(trialkoxysilyl)propylpolysulfan. Hierbei ist z = 0, R¹ ein Propylrest und R² ein Alkylrest mit 1 bis 30 Kohlenstoffatomen. Dieses Silan hat die allgemeine Konstitutionsformel III

(III) (R²O)₃-Si-(CH₂)₃-Sₓ-(CH₂)₃-Si-(OR²)₃.

Ganz besonders bevorzugt ist der Rest R² eine Ethylgruppe, so dass es sich bei dem Silan mit einer Polysulfangruppe um ein Bis(triethoxysilyl)propylpolysulfan handelt.

Gemäß einer weiteren bevorzugten Weiterbildung dieser Ausführungsform der Erfindung enthalten die Reste R² und/oder R³ des Silans mit einer Polysulfangruppe zusätzlich 1 bis 10 Stickstoffatome (N) und/oder Sauerstoffatome (O) als Heteroatome in der Kohlenstoffkette. Es ist gemäß dieser Weiterbildung der Erfindung denkbar, dass die Reste R² und/oder R³ z .B. eine Einheit mit der Konstitutionsformel IV

(IV) -(CH₂-CH₂-O)₅-(CH₂)₁₂CH₃

darstellen.

In diesem Fall enthalten die Reste R² und/oder R³ fünf Sauerstoffatome als Heteroatome.

In einer weiteren Ausführungsform der Erfindung weist das Silan mit einer Polysulfangruppe die allgemeine Formel V

(V) (R²O)_{3-y}R³_{y}-Si-R¹-Sₓ-R¹-Si-(O₂R²)R³

auf, wobei x = 1 bis 8 ist und wobei die R1 in einem Molekül gleich oder verschieden sind und ausgewählt sind aus linearen oder verzweigten C₁- bis C₁₈-Alkylresten, wobei die R² in einem Molekül gleich oder verschieden sind und ausgewählt sind aus linearen oder verzweigten oder zyklischen gesättigten C₁-bis C₃₀-Alkylresten, und wobei y und z gleich oder verschieden und 0 bis 3 sind und

wobei die R³ in einem Molekül gleich oder verschieden sind und ausgewählt sind aus linearen oder verzweigten C₁-bis C₁₀-Alkyl- oder Alkoxyresten.

In dieser Ausführungsform kann ein Rest R² zwei Sauerstoffatome miteinander verbrücken.

In einer weiteren Ausführungsform der Erfindung weist das Silan mit einer Polysulfangruppe die allgemeine Formel VI

(VI) (R²O₂)R³-Si-R¹-Sₓ-R¹-Si-(O₂R²)R³

auf, wobei x = 1 bis 8 ist und wobei die R1 in einem Molekül gleich oder verschieden sind und ausgewählt sind aus linearen oder verzweigten C₁- bis C₁₈-Alkylresten, wobei die R² in einem Molekül gleich oder verschieden sind und ausgewählt sind aus linearen oder verzweigten oder zyklischen gesättigten C₁-bis C₃₀-Alkylresten, und wobei die R³ in einem Molekül gleich oder verschieden sind und ausgewählt sind aus linearen oder verzweigten C₁-bis C₁₀-Alkyl- oder Alkoxyresten.

In dieser Ausführungsform kann ein Rest R² an beiden Enden des Moleküls zwei Sauerstoffatome miteinander verbrücken.

Vorzugsweise ist das Regenerierungsmittel, ausgewählt aus Bis(O,O-2-ethylhexyl-thiophosphoryl)polysulfid und/oder (Bis(triethoxysilyl)propyltetrasulfan (TESPT)). Die Substanzen können einzeln oder im Gemisch eingesetzt werden.

Das gemäß der Erfindung vorzugsweise eingesetzte Kautschukregenerat kann beispielsweise über das folgende, milde Abbauverfahren mit zumindest folgenden Verfahrensschritten erhalten werden:
- Vorlegen der zu regenerierenden schwefelvernetzten Gummiwerkstoffmischung in Mengen von 68 bis 98 Gew.-% in einem Innenmischer und
- Erwärmen der zu regenerierenden schwefelvernetzten Gummiwerkstoffmischung auf 50 bis 70 °C und
- Zugabe wenigstens eines Dithiophosphorylpolysulfides und/oder wenigstens eines Silanes mit einer Polysulfangruppe in Mengen von 2 bis 15 Gew.-% und
- Durchmischen der genannten Bestandteile zu einer Mischung für eine Dauer von 5 bis 35 Minuten bei einer Temperatur von 80 bis 150 °C.

Verfahren zur Herstellung von einsatzbaren Kautschukregeneraten für die Erfindung werden beispielsweise in der DE 10 2012 108 096 A1 beschrieben.

Gummiwerkstoffe, die in unterschiedlichen Kautschukprodukten eingesetzt werden, haben regelmäßig sehr unterschiedliche physikalisch-chemische bzw. mechanische Eigenschaften, was insbesondere auf die chemische Zusammensetzung der zur Herstellung verwendeten vulkanisierbaren Kautschukmischungen zurückgeführt werden kann. Entsprechend verhalten sich Gummiwerkstoffe bei der Regeneratherstellung unterschiedlich und resultieren in chemisch unterschiedlichen Kautschukregeneraten. In der Praxis kommt also der Wahl des Ausgangsmaterials eine wichtige Bedeutung zu. Vorliegend haben die Erfinder gefunden, dass Gummiwerkstoffe aus den Laufstreifen von Radialreifen für LKW und Busse, die durch ein anwendungstypisches Eigenschaftsprofil gekennzeichnet sind, eine besonders hohe Kompatibilität mit dem Prozess zur Herstellung des Regenerats aufweisen und die resultierenden Kautschukregenerate sich besonders dazu eignen, in vulkanisierbaren Kautschukmischungen mit Kieselsäure in den speziellen Silanen eingesetzt zu werden.

Für eine möglichst nachhaltige Herstellung der erfindungsgemäßen Kautschukmischung besteht die Gummiwerkstoffmischung aus zumindest 50 Gew.-%, vorzugsweise aus zumindest 70 Gew.-%, besonders bevorzugt zu im Wesentlichen 100 Gew.-%, aus zerkleinerten Laufstreifen von recycelten LKW-Radialreifen und/oder recycelten Bus-Radialreifen, bezogen auf die Masse der Gummiwerkstoffmischung. Recycelte Reifen heißt, sie wurden zuvor verwendetet und sind entsprechend zumindest teilweise abgefahrenen.

Die Gummiwerkstoffmischung enthält vorzugsweise keine detektierbaren Reste von Butyl- oder Halobutylkautschuken und nicht mehr als 0,01 Gew.-% Faserreste.

Die Kautschukmischung enthält 40 bis 350 phr zumindest eines Füllstoffes. Dabei kann es sich um Füllstoffe, wie Ruße, Kieselsäuren, Alumosilicate, Kreide, Stärke, Magnesiumoxid, Titandioxid oder Kautschukgele in üblichen Mengen enthalten, wobei die Füllstoffe in Kombination eingesetzt werden können. Weiterhin sind Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen) denkbar. Auch Graphit und Graphene sowie sogenannte "carbon-silica dual-phase filler" sind als Füllstoff einsetzbar.

Es können unterschiedliche Füllstoffe im Gemisch eingesetzt werden.

Ist in der Kautschukmischung Ruß enthalten, können alle dem Fachmann bekannten Ruß-Typen eingesetzt werden. Bevorzugt wird jedoch ein Ruß eingesetzt, der eine Jodadsorptionszahl gemäß ASTM D 1510 von 30 bis 180 g/kg, bevorzugt 30 bis 130 kg/g, und eine DBP-Zahl gemäß ASTM D 2414 von 80 bis 200 ml/100 g, bevorzugt 100 bis 200 ml/100g, besonders bevorzugt 100 bis 180 ml/100g, aufweist. Hiermit werden für die Anwendung im Fahrzeugreifen besonders gute Rollwiderstandsindikatoren (Rückprallelastizität bei 70 °C) bei guten sonstigen Reifeneigenschaften erzielt.

Zur Reduzierung des Rollwiderstandes hat es sich als vorteilhaft erwiesen, wenn die Kautschukmischung als 20 bis 200 phr Kieselsäure als Füllstoff enthält. Zusätzlich sind weitere Füllstoffe, wie Ruß, in der Mischung enthalten, so dass ein Anteil von 40 bis 350 phr an Gesamtfüllstoff in der Mischung enthalten ist.

Es können unterschiedlichste Kieselsäuren, wie "low surface area" oder hoch dispergierbare Kieselsäure, auch im Gemisch, zum Einsatz kommen. Besonders bevorzugt ist es, wenn eine fein verteilte, gefällte Kieselsäure verwendet wird, die eine CTAB-Oberfläche (gemäß ASTM D 3765) von 30 bis 350 m²/g, vorzugsweise von 110 bis 250 m²/g, aufweist. Als Kieselsäuren können sowohl konventionelle Kieselsäuren wie die des Typs VN3 (Handelsname) der Firma Evonik als auch hoch dispergierbare Kieselsäuren, so genannte HD-Kieselsäuren (z. B. Ultrasil 7000 der Firma Evonik), zum Einsatz kommen. Geeignet sind auch aus Reisschalen-Asche hergestellte Kieselsäuren ("rice husk ash silica" (RHAS)).

Zur Verbesserung der Verarbeitbarkeit und zur Anbindung der Kieselsäure an den Dienkautschuk in kieselsäurehaltigen Mischungen wird vorzugsweise zumindest ein Silan-Kupplungsagens in Mengen von 1 - 15 phf (Gewichtsteile, bezogen auf 100 Gewichtsteile Silika/Kieselsäure) in der Kautschukmischung eingesetzt. Die Silan-Kupplungsagenzien können auch im Gemisch eingesetzt werden.

Die in dieser Schrift verwendete Angabe phf (parts per hundred parts of filler by weight) ist dabei die in der Kautschukindustrie gebräuchliche Mengenangabe für Kupplungsagenzien für polare Füllstoffe. Im Rahmen der vorliegenden Anmeldung bezieht sich phf auf das vorhandene Silika/Kieselsäure, das heißt, dass andere eventuell vorhandene Füllstoffe wie Ruß nicht in die Berechnung der Menge an Silan-Kupplungsagens mit eingehen.

Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, -NH₂ oder -Sₓ- (mit x = 2-8). So können als Silan-Kupplungsagenzien z. B. 3-Mercaptopropyltriethoxysilan, 3-Thiocyanatopropyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S der Firma Degussa) zugesetzt werden. Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT^{®} in verschiedenen Varianten von der Firma Momentive, USA, oder solche, die unter dem Namen VP Si 363 von der Firma Evonik Industries vertrieben werden. Einsetzbar sind auch sogenannte "silated core polysulfides" (SCP, Polysulfide mit silyliertem Kern), die z. B. in der US 20080161477 A1 und der EP 2 114 961 B1 beschrieben werden.

Vorzugsweise ist zumindest ein Silan-Kupplungsagens in der Kautschukmischung ein geblocktes Mercaptosilan.

Die erfindungsgemäße Kautschukmischung kann des Weiteren unterschiedliche Weichmacher enthalten. Diese sind bevorzugt in Mengen bis zu 50 phr in der Mischung enthalten.

Als Weichmacher können beispielsweise solche eingesetzt werden, die ausgewählt sind aus der Gruppe bestehend aus Weichmachern aus nachwachsenden Rohstoffen wie Rapsöl oder Sonnenblumenöl, Mineralölen, Phosphorsäureestern wie Tri-(2-ethylhexyl)phosphat, und Flüssig-Polymeren mit einem Gewichtsmittel der Molekulargewichtsverteilung M_{w} gemäß GPC von 60.000 g/mol oder weniger. Vorzugsweise werden DAE (Destillated Aromatic Extracts), RAE (Residual Aromatic Extract), TDAE (Treated Destillated Aromatic Extracts), MES (Mild Extracted Solvents), Rapsöl und/oder flüssige Dien-Polymere eingesetzt.

Des Weiteren kann die Kautschukmischung übliche Zusatzstoffe in üblichen Gewichtsteilen enthalten, die bei deren Herstellung bevorzugt in wenigstens einer Grundmischstufe zugegeben werden. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure) oder Zinkkomplexe wie z. B. Zinkethylhexanoat,
c) Wachse,
d) Mastikationshilfsmittel, wie z. B. 2,2'-Dibenzamidodiphenyldisulfid (DBD), und
e) Verarbeitungshilfsmittel, wie z.B. Fettsäuresalze, wie z.B. Zinkseifen, und Fettsäureester und deren Derivate.

Der Mengenanteil der Gesamtmenge an weiteren Zusatzstoffen beträgt 3 bis 150 phr, bevorzugt 3 bis 100 phr und besonders bevorzugt 5 bis 80 phr.

Die Vulkanisation der Kautschukmischung wird in Anwesenheit von Schwefel und/oder Schwefelspendern mit Hilfe von Vulkanisationsbeschleunigern durchgeführt, wobei einige Vulkanisationsbeschleuniger zugleich als Schwefelspender wirken können. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.

Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert-Butyl-2-benzothiazylsulfenamid (TBBS).

Außerdem kann die Kautschukmischung Vulkanisationsverzögerer enthalten.

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe bestehend aus z. B. Thiuramdisulfiden, wie z. B. Tetrabenzylthiuramdisulfid (TBzTD), Tetramethylthiuramdisulfid (TMTD) oder Tetraethylthiuramdisulfid (TETD), Thiuramtetrasulfiden, wie z. B. Dipentamethylenthiuramtetrasulfid (DPTT), Dithiophosphaten, wie z. B. DipDis (Bis-(Diisopropyl)thiophosphoryldisulfid), Bis(O,O-2-ethylhexyl-thiophosphoryl)Polysulfid (z. B. Rhenocure SDT 50^{®}, Rheinchemie GmbH, Zinkdichloryldithiophosphat (z. B. Rhenocure ZDT/S^{®}, Rheinchemie GmbH) oder Zinkalkyldithiophosphat, und 1,6-Bis(N,N-dibenzylthiocarbamoyldithio)hexan und Diarylpolysulfiden und Dialkylpolysulfiden.

Auch weitere netzwerkbildende Systeme, wie sie beispielsweise unter den Handelsnamen Vulkuren^{®}, Duralink^{®} oder Perkalink^{®} erhältlich sind, oder netzwerkbildende Systeme, wie sie in der WO 2010/049216 A2 beschrieben sind, können in der Kautschukmischung eingesetzt werden. Das letztere System enthält ein Vulkanisationsmittel, welches mit einer Funktionalität größer vier vernetzt und zumindest einen Vulkanisationsbeschleuniger.

Der Kautschukmischung wird bei deren Herstellung bevorzugt wenigstens ein Vulkanisationsmittel ausgewählt aus der Gruppe bestehend aus Schwefel, Schwefelspender, Vulkanisationsbeschleuniger und Vulkanisationsmittel, die mit einer Funktionalität größer vier vernetzen, in der Fertigmischstufe zugegeben. Hierdurch lässt sich aus der gemischten Fertigmischung durch Vulkanisation eine schwefelvernetzte Kautschukmischung für die Anwendung in Gummiprodukten, insbesondere in Fahrzeugluftreifen, herstellen.

Die Begriffe "vulkanisiert" und "vernetzt" werden im Rahmen der vorliegenden Erfindung synonym verwendet.

Die Herstellung der Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z. B. durch einen Extrusionsvorgang weiterverarbeitet und in die entsprechende Form gebracht. Anschließend erfolgt die Weiterverarbeitung durch Vulkanisation, wobei aufgrund des im Rahmen der vorliegenden Erfindung zugegebenen Vulkanisationssystems eine Schwefelvernetzung stattfindet.

Die Kautschukmischung kann für unterschiedlichste Gummiprodukte eingesetzt werden. Vorzugsweise wird sie für die Herstellung von Fahrzeugluftreifen, wie PKW-, Van-, LKW- oder Zweiradreifen, verwendet, wobei die Kautschukmischung zumindest den mit der Fahrbahn in Berührung kommenden Teil des Laufstreifens bildet. Die Kautschukmischung kann aber auch in anderen Reifen, wie Vollreifen und nicht-pneumatischen Reifen, eingesetzt werden. Ebenso ist ein Einsatz bei der Runderneuerung möglich.

Bei einem Fahrzeugluftreifen kann der Laufstreifen aus einer einzigen Mischung bestehen, die gemäß der Erfindung ausgebildet ist. Häufig weisen Fahrzeugluftreifen heute jedoch einen Laufstreifen mit einer sogenannten Cap/Base-Konstruktion auf. Unter "Cap" wird dabei der mit der Fahrbahn in Berührung kommende Teil des Laufstreifens verstanden, der radial außen angeordnet ist (Laufstreifenoberteil oder Laufstreifencap). Unter "Base" wird dabei der Teil des Laufstreifens verstanden, der radial innen angeordnet ist, und somit im Fahrbetrieb nicht oder nur am Ende des Reifenlebens mit der Fahrbahn in Berührung kommt (Laufstreifenunterteil oder Laustreifenbase). Bei einem Fahrzeugluftreifen mit einer solchen Cap/Base-Konstruktion ist zumindest die Kautschukmischung für die Cap gemäß dem Anspruch 1 ausgebildet.

Der erfindungsgemäße Fahrzeugluftreifen kann auch einen Laufstreifen aufweisen, der aus verschiedenen nebeneinander und/oder untereinander angeordneten Laufstreifenmischungen besteht (Multikomponentenlaufstreifen).

Bei der Herstellung des Fahrzeugluftreifens wird die Mischung als Fertigmischung vor der Vulkanisation in die Form eines Laufstreifens, bevorzugt wenigstens in die

Form einer Laufstreifencap, gebracht und bei der Herstellung des Fahrzeugreifenrohlings wie bekannt aufgebracht. Der Laufstreifen, bevorzugt wenigstens die Laufstreifencap, kann auch in Form eines schmalen Kautschukmischungsstreifens auf einen Reifenrohling aufgewickelt werden.

Von der Erfindung sind sämtliche vorteilhaften Ausgestaltungen, die sich unter anderem in den Patentansprüchen widerspiegeln, umfasst. Insbesondere sind von der Erfindung auch Ausgestaltungen umfasst, die sich durch Kombination unterschiedlicher Merkmale, beispielsweise von Bestandteilen der Kautschukmischung, unterschiedlicher Abstufungen bei der Bevorzugung dieser Merkmale ergeben, sodass auch eine Kombination eines ersten als "bevorzugt" bezeichneten Merkmals oder im Rahmen einer vorteilhaften Ausführungsform beschriebenen Merkmals mit einem weiteren als z. B. "besonders bevorzugt" bezeichneten Merkmal von der Erfindung erfasst ist.

Die Erfindung soll nun anhand von Vergleichs- und Ausführungsbeispielen, die in der Tabelle 1 zusammengefasst sind, näher erläutert werden.

Die Vergleichsmischungen sind dabei mit V, die erfindungsgemäßen Mischungen sind mit E gekennzeichnet.

Die Herstellung des Kautschukregenerates für die in Tabelle 1 angegebenen Mischungen erfolgte gemäß den folgenden Verfahrensschritten in der angegebenen Reihenfolge:
- Zerkleinern einer Gummiwerkstoffmischung, die im Wesentlichen zu 100 Gew.-% aus zerkleinerten Laufstreifen von LKW-Radialreifen und Bus-Radialreifen bestand, mittels eines kryogenen Mahlverfahrens (Stiftmühle) zu einem Granulat mit der Partikelgröße 0,001 bis 0,5 mm,
- Vorlegen von 90,7 Gew.-% der zerkleinerten, zu regenerierenden Gummiwerkstoffmischung in einem Innenmischer,
- Erwärmen der zerkleinerten, zu regenerierenden Gummiwerkstoffmischung auf 60 °C,
- Zugabe von 2 Gew.-% Ruß (N121),
- Zugabe von 5,5 Gew.-% des Regenerierungsmittel Bis(triethoxysilyl)propyltetrasulfan (TESPT),
- Zugabe von 2 Gew.-% TDAE-Öl (TDAE = treated aromatic extract),
- Durchmischen der genannten Bestandteile zu einem Kautschukregenerat für eine Dauer von 20 Minuten bei einer Temperatur von 100 °C,
- Abkühlen des Kautschukregenerats

Die Mischungsherstellung erfolgte nach den in der Kautschukindustrie üblichen Verfahren unter üblichen Bedingungen in drei Stufen in einem Labormischer bei dem zunächst in der ersten Mischstufe (Grundmischstufe) alle Bestandteile außer dem Vulkanisationssystem (Schwefel und vulkanisationsbeeinflussende Substanzen) vermischt wurden. In der zweiten Mischstufe wurde die Grundmischung nochmals durchmischt. Durch Zugabe des Vulkanisationssystems in der dritten Stufe (Fertigmischstufe) wurde die Fertigmischung erzeugt, wobei bei 90 bis 120 °C gemischt wurde.

Anschließend wurde der Verlustfaktor tan δ (10%) der Mischung mittels RPA (= *engl.* "rubber process analyzer") in Anlehnung an ASTM D6601 vom zweiten Dehnungsdurchlauf bei 1 Hz, 70°C und 10 % Dehnung im vulkanisierten, konditionierten Zustand ermittelt, wobei die Probekörper in der Apparatur durch 10-minütige Vulkanisation unter Druck bei 170 °C hergestellt wurden.

Ferner wurden aus sämtlichen Mischungen Prüfkörper durch 20-minütige Vulkanisation unter Druck bei 160 °C hergestellt und mit diesen Prüfkörpern für die Kautschukindustrie typische Materialeigenschaften mit den im Folgenden angegebenen Testverfahren ermittelt:
- Shore-A-Härte bei Raumtemperatur gemäß ISO 868
- Rückprallelastizität bei Raumtemperatur und 70 °C gemäß ISO 4662
- Maximaler Verlustfaktor tan δₘₐₓ bei 55 °C als Maximalwert über den Dehnungssweep aus dynamisch-mechanischer Messung bei einer Frequenz von 10 Hz gemäß ISO 4664-1
- Hochgeschwindigkeitsreißenergie (HSTE) gemäß ISO 8256.

Der maximale Verlustfaktor tan δₘₐₓ bei 55 °C (Eplexor) sowie der Verlustfaktor tan δ (10%) mittels RPA lassen sich mit dem Rollwiderstand korrelieren. Ein niedriger Verlustfaktor tan δₘₐₓ bei 55 °C sowie ein niedriger Verlustfaktor tan δ (10%) mittels RPA stehen für einen niedrigen Rollwiderstand.

Ein weiterer Indikator für den Rollwiderstand ist die Rückprallelastizität bei 70 °C. Ein hoher Wert korreliert hierbei mit einer guten Rollwiderstandsperformance. Hohe Werte der Hochgeschwindigkeitsreißenergie sind ein Maß für eine hohe strukturelle Haltbarkeit und einen guten Widerstand gegen Schnitte in und Ausbrüche aus dem Gummimaterial (gute Cut-und-Chip- sowie Chip-und-Chunk-Perfomance).

**Tabelle 1**

| **Bestandteile** | **Einheit** | **1(V)** | **2(V)** | **3(V)** | **4(E)** |
|---|---|---|---|---|---|
| Naturkautschuk | phr | 10 | 10 | 10 | 10 |
| SSBR^{a} | phr | 72 | 72 | 72 | 72 |
| BR^{b} | phr | 18 | 18 | 18 | 18 |
| Kautschukregenerat | phr | - | - | 20 | 20 |
| Kieselsäure^{c} | phr | 95 | 95 | 95 | 95 |
| TDAE^{d} | phr | 35 | - | 35 | - |
| Terpenharz^{e} | phr | - | 35 | - | 35 |
| Alterungsschutzmittel | phr | 2 | 2 | 2 | 2 |
| Ozonschutzwachs | phr | 2 | 2 | 2 | 2 |
| Zinkoxid | phr | 2,5 | 2,5 | 2,5 | 2,5 |
| Stearinsäure | phr | 2,5 | 2,5 | 2,5 | 2,5 |
| Silan-Kupplungsagens^{f} | phr | 9,7 | 9,7 | 9,7 | 9,7 |
| Beschleuniger | phr | 4 | 4 | 4 | 4 |
| Schwefel | phr | 2 | 2 | 2 | 2 |

| **Eigenschaften** | | | | | |
|---|---|---|---|---|---|
| tan δ (10%) mittels RPA, cured, cond. | - | 0,140 | 0,166 | 0,149 | 0,161 |
| Shorehärte bei RT | ShoreA | 66,1 | 66,8 | 65,3 | 65,2 |
| Rückprallelast. bei RT | % | 30,8 | 12,4 | 31,5 | 14,9 |
| Rückprallelast. bei 70 °C | % | 51,8 | 45,1 | 51,2 | 46,5 |
| tan δₘₐₓ bei 55 °C | - | 0,154 | 0,187 | 0,157 | 0,179 |
| HSTE | MJ/m³ | 8,4 | 12,4 | 7,1 | 12,4 |

| | | | | | |
|---|---|---|---|---|---|
| ^{a} SSBR Sprintan^{®} SLR-4601, Fa. Trinseo ^{b} Buna CB 1203, Arlanxeo, T_{g} = -105 °C, cis-Anteil > 95 % ^{c} Ultrasil^{®} VN3, Evonik, Stickstoff-Oberfläche = 180 m²/g, CTAB 165 m²/g ^{d} TDAE (Treated Destillated Aromatic Extracts), T_{g} = -55 °C ^{e} Sylvatraxx^{®} 8115, Kraton Chemicals SAS, nicht auf Limonen basierendes Terpenharz, Erweichungspunkt = 115 °C (gemäß ASTM E 28), T_{g} = 66 °C ^{f} NXT Silan, Momentive, 3-Mercaptopropyltriethoxysilan | | | | | |

Aus den Daten der Tabelle 1 wird ersichtlich, dass sich durch die kombinierte Anwesenheit des Terpenharzes, welches zu mehr als 95 % auf biologisch nachwachsenden Rohstoffen basiert, mit einem Kautschukregenerat in der Mischung 4(E) der Verlustfaktor tan δ (10 %) als Maß für den Rollwiderstand stark verringern lässt. Dieser Effekt war aus den Einzelmaßnahmen, wie ihn die Mischungen 2(V) (nur Zugabe des speziellen Terpenharzes) und 3(V) (nur Zugabe des Kautschukregenerates) zeigen, keinesfalls zu erwarten. Gleiches gilt für den tan δₘₐₓ-Wert. Ein weiterer Indikator für den unerwartet guten Rollwiderstand ist die Rückprallelastizität bei 70 °C. Gleichzeitig ist ein hoher Wert der Hochgeschwindigkeitsreißenergie bei der Mischung 4(E) zu verzeichnen. Die Widerstandsfähigkeit der vulkanisierten Mischung gegen Schnitte und Ausbrüche ist daher hoch und eine hohe strukturelle Haltbarkeit ist gegeben.

## Patentansprüche

1. Schwefelvernetzbare Kautschukmischung, insbesondere für den Laufstreifen von Fahrzeugreifen, enthaltend wenigstens folgende Bestandteile:
- zumindest einen Dienkautschuk,
- 5 bis 70 phr (Gewichtsteile, bezogen auf 100 Gewichtsteile der gesamten Kautschuke in der Mischung) zumindest eines Terpenharzes,
- 5 bis 80 phr zumindest eines Kautschukregenerates, und
- 40 - 350 phr zumindest eines Füllstoffes.

2. Schwefelvernetzbare Kautschukmischung nach Anspruch 1, **dadurch gekennzeichnet, dass** sie 10 bis 60 phr, bevorzugt 20 bis 50 phr, zumindest eines Terpenharzes enthält.

3. Schwefelvernetzbare Kautschukmischung nach Anspruch 1 oder 2, **dadurch gekennzeichnet, dass** das zumindest eine Terpenharz ein mittleres Molekulargewicht M_{w} gemäß GPC von 800 bis 1500 g/mol aufweist.

4. Schwefelvernetzbare Kautschukmischung nach zumindest einem der vorhergehenden Ansprüche, **dadurch gekennzeichnet, dass** das zumindest eine Terpenharz eine Erweichungspunkt von 100 bis 140 °C, vorzugsweise 110 bis 130 °C, aufweist.

5. Schwefelvernetzbare Kautschukmischung nach zumindest einem der vorhergehenden Ansprüche, **dadurch gekennzeichnet, dass** das zumindest eine Terpenharz eine Glasübergangstemperatur Tg von der 50 bis 100 °C, vorzugsweise von 50 bis 80 °C, aufweist.

6. Schwefelvernetzbare Kautschukmischung zumindest einem der vorhergehenden Ansprüche, **dadurch gekennzeichnet, dass** das zumindest eine Terpenharz zu mehr als 95 % auf biologisch nachwachsenden Rohstoffen basiert.

7. Schwefelvernetzbare Kautschukmischung nach Anspruch 6, **dadurch gekennzeichnet, dass** das zumindest eine Terpenharz zu 100 % auf biologisch nachwachsenden Rohstoffen basiert.

8. Schwefelvernetzbare Kautschukmischung nach Anspruch 6 oder 7, **dadurch gekennzeichnet, dass** das zumindest eine Terpenharz nicht auf Limonen basiert.

9. Schwefelvernetzbare Kautschukmischung nach zumindest einem der Ansprüche 6 bis 8, **dadurch gekennzeichnet, dass** das zumindest eine Terpenharz auf α- und β-Pinen basiert.

10. Schwefelvernetzbare Kautschukmischung nach zumindest einem der vorhergehenden Ansprüche, **dadurch gekennzeichnet, dass** sie 5 bis 40 phr des zumindest einen Kautschukregenerates enthält.

11. Schwefelvernetzbare Kautschukmischung nach zumindest einem der vorhergehenden Ansprüche, **dadurch gekennzeichnet, dass** das zumindest eine Kautschukregenerat mittels zumindest eines Regenerierungsmittels, ausgewählt aus der Gruppe bestehend aus Dithiophosphorylpolysulfiden und Silanen mit einer Polysulfangruppe, aus einer Gummiwerkstoffmischung in einem Innenmischer hergestellt wurde, wobei die Gummiwerkstoffmischung aus zumindest 50 Gew.-% aus zerkleinerten Laufstreifen von LKW-Radialreifen und/oder Bus-Radialreifen besteht.

12. Schwefelvernetzbare Kautschukmischung nach Anspruch 11, **dadurch gekennzeichnet, dass** das Regenerierungsmittel, ausgewählt ist aus Bis(O,O-2-ethylhexyl-thiophosphoryl)polysulfid und/oder (Bis(triethoxysilyl)propyltetrasulfan (TESPT)).

13. Schwefelvernetzbare Kautschukmischung nach Anspruch 11 oder 12, **dadurch gekennzeichnet, dass** die Gummiwerkstoffmischung aus zumindest 70 Gew.-% aus zerkleinerten Laufstreifen von LKW-Radialreifen und/oder Bus-Radialreifen besteht.

14. Schwefelvernetzbare Kautschukmischung nach zumindest einem der vorhergehenden Ansprüche, **dadurch gekennzeichnet, dass** sie 20 bis 200 phr Kieselsäure als Füllstoff enthält.

15. Fahrzeugluftreifen nach Anspruch mit einem Laufstreifen, dessen zumindest mit der Fahrbahn in Berührung kommender Teil aus einer mit Schwefel vulkanisierten Kautschukmischung nach einem der Ansprüche 1 bis 14 besteht.
